# EUROPEAN PATENT APPLICATION

(11) **EP 4 415 205 A1**
(43) Date of publication of application: **14.08.2024**
(21) Application number: 22930275.7
(22) Date of filing: 09.03.2022
(51) Int. Cl.: H02J 7/00, B60L 53/24

(54) **POWER BATTERY VOLTAGE REGULATION SYSTEM, AND CONTROL METHOD AND CONTROL APPARATUS THEREFOR**

(71) Applicant: Contemporary Amperex Technology Co., Limited, Ningde, Fujian 352100 (CN)
(72) Inventor: ZHAO, Yuanmiao, Ningde, Fujian 352100 (CN); LI, Zhanliang, Ningde, Fujian 352100 (CN); YAN, Yu, Ningde, Fujian 352100 (CN); CHEN, Xinwei, Ningde, Fujian 352100 (CN); GAO, Jinfeng, Ningde, Fujian 352100 (CN); DAN, Zhimin, Ningde, Fujian 352100 (CN)
(74) Representative: Ziebig Hengelhaupt Intellectual Property Attorneys Patentanwaltskanzlei PartGmbB
(86) International application number: PCT/CN2022/080004
(87) International publication number: WO 2023/168634

(57) **Abstract**

A power battery voltage regulation system, and a control method and control apparatus thereof are provided. The control method includes: obtaining a first voltage and a second voltage, where the first voltage is a voltage of a power battery, the second voltage is a maximum output voltage of a charging device, and the charging device is configured to connect to a charging and discharging interface; when the first voltage is smaller than the second voltage, controlling a first switch, a second switch, a third switch, a fourth switch, and a fifth switch to be turned on, and controlling all bridge arms in a first bridge arm group and a second bridge arm to be turned off; or when the first voltage is greater than or equal to the second voltage, controlling the first switch, the second switch, the fourth switch, the fifth switch, upper bridge arms in the first bridge arm group, and an upper bridge arm in the second bridge arm to be turned on, and controlling the third switch, lower bridge arms in the first bridge arm group, and a lower bridge arm in the second bridge arm to be turned off.

## Description

### TECHNICAL FIELD

This application relates to the field of battery technologies, and in particular, to a power battery voltage regulation system and a control method and control apparatus thereof.

### BACKGROUND

Power batteries, with their advantages such as high energy density, support of cyclic charging, safety, and environmental friendliness, have been widely used in new energy vehicles, consumer electronics, energy storage systems, and other fields. With the development of battery technologies, various performances of the power batteries are constantly improving, and especially voltages of the power batteries have been significantly increased.

However, the maximum output voltage of a charging device currently used is still lower than a charging voltage required for new power batteries with high voltages, and it is also difficult for power batteries to regulate output voltages as required by different load devices. Therefore, how to flexibly regulate charging and discharging voltages of power batteries in different scenarios is an urgent problem to be resolved.

### SUMMARY

Embodiments of this application provide a power battery voltage regulation system and a control method and control apparatus thereof, which can flexibly regulate a charging voltage and discharging voltage of a power battery to meet charging or discharging voltage requirements of the power battery in different scenarios.

According to a first aspect, this application provides a control method for power battery voltage regulation system. The power battery voltage regulation system includes a power battery, a switch module, a charging and discharging interface, and a motor. The switch module includes a first switch, a second switch, a third switch, a fourth switch, a fifth switch, a first bridge arm group, and a second bridge arm. Each bridge arm in the first bridge arm group and the second bridge arm includes an upper bridge arm and a lower bridge arm. Joints between the upper bridge arms and the lower bridge arms of the bridge arms in the first bridge arm group are connected to all inductors in the motor in one-to-one correspondence, and a joint between the upper bridge arm and the lower bridge arm in the second bridge arm is connected to a three-phase center point of the motor. One terminal of the first switch is connected to a positive electrode of the power battery, the other terminal of the first switch is connected to one terminal of the third switch and connected to all the inductors in the motor via the upper bridge arms in the first bridge arm group, the other terminal of the third switch is connected to one terminal of the fourth switch and connected to the three-phase center point of the motor via the upper bridge arm in the second bridge arm, and the other terminal of the fourth switch is connected to a positive electrode of the charging and discharging interface. One terminal of the second switch is connected to a negative electrode of the power battery; the other terminal of the second switch is connected to one terminal of the fifth switch, connected to all the inductors in the motor via the lower bridge arms in the first bridge arm group, and connected to the three-phase center point of the motor via the lower bridge arm in the second bridge arm; and the other terminal of the fifth switch is connected to a negative electrode of the charging and discharging interface. The control method includes: obtaining a first voltage and a second voltage, where the first voltage is a voltage of the power battery, the second voltage is a maximum output voltage of a charging device, and the charging device is configured to connect to charging and discharging interface; when the first voltage is smaller than the second voltage, controlling the first switch, the second switch, the third switch, the fourth switch, and the fifth switch to be turned off, and controlling all the bridge arms in the first bridge arm group and the second bridge arm to be turned on; or when the first voltage is greater than or equal to the second voltage, controlling the first switch, the second switch, the fourth switch, the fifth switch, the upper bridge arms in the first bridge arm group, and the upper bridge arm in the second bridge arm to be turned off, and controlling the third switch, the lower bridge arms in the first bridge arm group, and the lower bridge arm in the second bridge arm to be turned on.

In the control method for power battery voltage regulation system provided in the embodiments of this application, under different circumstances, the charging device can charge a power battery with a voltage lower than the maximum output voltage of the charging device, and also charge a power battery with a voltage higher than the maximum output voltage of the charging device by controlling different switches in a circuit structure to be turned off or turned on, without changing an existing charging facility. In the control method, the charging voltage of the power battery can be flexibly regulated in different scenarios, so that compatibility with an external charging device can be achieved, and a charging process of the power battery is not limited by the maximum output voltage of the charging device.

In some embodiments, when the first voltage is greater than or equal to the second voltage, the control method further includes: in a first duration, controlling the fourth switch, the fifth switch, the lower bridge arms in the first bridge arm group, and the upper bridge arm in the second bridge arm to be turned off, and controlling the third switch, the upper bridge arms in the first bridge arm group, and the lower bridge arm in the second bridge arm to be turned on. The controlling the first switch, the second switch, the fourth switch, the fifth switch, the upper bridge arms in the first bridge arm group, and the upper bridge arm in the second bridge arm to be turned off, and controlling the third switch, the lower bridge arms in the first bridge arm group, and the lower bridge arm in the second bridge arm to be turned on includes: in a second duration, controlling the first switch, the second switch, the fourth switch, the fifth switch, the upper bridge arms in the first bridge arm group, and the upper bridge arm in the second bridge arm to be turned off, and controlling the third switch, the lower bridge arms in the first bridge arm group, and the lower bridge arm in the second bridge arm to be turned on; where a first period includes the first duration and the second duration, and in the first period, the first duration is before the second duration.

In the embodiments provided in this application, in a case that a circuit structure is not changed, the charging voltage of the power battery can be flexibly regulated according to a relationship between the charging device and the voltage of the power battery. In addition, a circuit structure of the power battery voltage regulation system is configured to provide energy to the motor, thereby implementing boost charging of the power battery by controlling different switches in a same circuit to be turned off or turned on.

In some embodiments, the first duration and second duration are alternately distributed.

In a charging process of the power battery, the first duration and the second duration are alternately distributed, so that continuous charging can be implemented after a voltage increases, ensuring that the charging process is undisrupted.

According to a second aspect, this application provides a control method for power battery voltage regulation system. The power battery voltage regulation system includes a power battery, a switch module, a charging and discharging interface, and a motor. The switch module includes a first switch, a second switch, a third switch, a fourth switch, a fifth switch, a first bridge arm group, and a second bridge arm. Each bridge arm in the first bridge arm group and the second bridge arm includes an upper bridge arm and a lower bridge arm, joints between the upper bridge arms and the lower bridge arms of the bridge arms in the first bridge arm group are connected to all inductors in the motor in one-to-one correspondence, and a joint between the upper bridge arm and the lower bridge arm of the second bridge arm is connected to a three-phase center point of the motor. One terminal of the first switch is connected to a positive electrode of the power battery, the other terminal of the first switch is connected to one terminal of the third switch and connected to all the inductors in the motor via the upper bridge arms in the first bridge arm group, the other terminal of the third switch is connected to one terminal of the fourth switch and connected to the three-phase center point of the motor via the upper bridge arm in the second bridge arm, and the other terminal of the fourth switch is connected to a positive electrode of the charging and discharging interface. One terminal of the second switch is connected to a negative electrode of the power battery; the other terminal of the second switch is connected to one terminal of the fifth switch, connected to all the inductors in the motor via the lower bridge arms in the first bridge arm group, and connected to the three-phase center point of the motor via the lower bridge arm in the second bridge arm; and the other terminal of the fifth switch is connected to a negative electrode of the charging and discharging interface. The control method includes: obtaining a first voltage and a third voltage, where the first voltage is a voltage of the power battery, the third voltage is a requested voltage of a load device, and the load device is configured to connect to the charging and discharging interface; when the first voltage is greater than the third voltage, controlling the fourth switch, the fifth switch, the lower bridge arms in the first bridge arm group, and the upper bridge arm in the second bridge arm to be turned off, and controlling the third switch, the upper bridge arms in the first bridge arm group, and the lower bridge arm in the second bridge arm to be turned on; or when the first voltage is smaller than the third voltage, controlling the first switch, the second switch, the fourth switch, the fifth switch, the upper bridge arms in the first bridge arm group, and the upper bridge arm in the second bridge arm to be turned off, and controlling the third switch, the lower bridge arms in the first bridge arm group, and the lower bridge arm in the second bridge arm to be turned on.

In the control method for power battery voltage regulation system provided in the embodiments of this application, under different circumstances, controlling different switches in the circuit structure to be turned on or turned off can allow the power battery voltage regulation system to adapt to various load devices with different requested voltages without changing a circuit structure, so that the power battery voltage regulation system can provide electrical energy to a load device with a requested voltage higher than a voltage of the power battery, and can also provide electrical energy to a load device with a requested voltage lower than the voltage of the power battery, thereby regulating a discharging voltage of the power battery flexibly in different scenarios and providing electrical energy to the various load devices.

In some embodiments, the control method further includes: in a third duration, controlling the first switch, the second switch, the upper bridge arms in the first bridge arm group, and the lower bridge arm in the second bridge arm to be turned on, and controlling the third switch, the lower bridge arms in the first bridge arm group, and the upper bridge arm in the second bridge arm to be turned off. The when the first voltage is greater than the third voltage, controlling the fourth switch, the fifth switch, the lower bridge arms in the first bridge arm group, and the upper bridge arm in the second bridge arm to be turned on, and controlling the third switch, the upper bridge arms in the first bridge arm group, and the lower bridge arm in the second bridge arm to be turned off includes: when the first voltage is greater than the third voltage, in a fourth duration, controlling the fourth switch, the fifth switch, the lower bridge arms in the first bridge arm group, and the upper bridge arm in the second bridge arm to be turned on, and controlling the third switch, the upper bridge arms in the first bridge arm group, and the lower bridge arm in the second bridge arm to be turned off; where a second period includes the third duration and the fourth duration, and in the second period, the third duration is before the fourth duration.

In the embodiments provided in this application, the output voltage can be flexibly regulated as required by the load device without changing the circuit structure. In addition, a circuit structure of the power battery voltage regulation system is configured to provide energy to the motor, implementing buck discharging of the power battery by controlling different switches in a same circuit to be turned on or turned off.

In some embodiments, the control method further includes: in a third duration, controlling the first switch, the second switch, the upper bridge arms in the first bridge arm group, and the lower bridge arm in the second bridge arm to be turned on, and controlling the third switch, the lower bridge arms in the first bridge arm group, and the upper bridge arm in the second bridge arm to be turned off. The when the first voltage is smaller than the third voltage, controlling the first switch, the second switch, the fourth switch, the fifth switch, the upper bridge arms in the first bridge arm group, and the upper bridge arm in the second bridge arm to be turned on, and controlling the third switch, the lower bridge arms in the first bridge arm group, and the lower bridge arm in the second bridge arm to be turned off includes: when the first voltage is smaller than the third voltage, in a fifth duration, controlling the first switch, the second switch, the fourth switch, the fifth switch, the upper bridge arms in the first bridge arm group, and the upper bridge arm in the second bridge arm to be turned on, and controlling the third switch, the lower bridge arms in the first bridge arm group, and the lower bridge arm in the second bridge arm to be turned off; where a third period includes the third duration and the fifth duration, and in the third period, the third duration is before the fifth duration.

In the embodiments provided in this application, the output voltage can be flexibly regulated as required by the load device without changing the circuit structure. In addition, a circuit structure of the power battery voltage regulation system is configured to provide energy to the motor, implementing boost discharging of the power battery by controlling different switches in a same circuit to be turned on or turned off.

In some embodiments, the third duration and the fourth duration are alternately distributed.

In a buck discharging process of the power battery, the third duration and the fourth duration are alternately distributed, so that continuous discharging can be implemented after a voltage decreases, ensuring that the discharging process is undisrupted.

In some embodiments, the third duration and the fifth duration are alternately distributed.

In a boost discharging process of the power battery, the third duration and the fifth duration are alternately distributed, so that continuous charging can be implemented after a voltage increases, ensuring that the charging process is undisrupted.

According to a third aspect, this application provides a power battery voltage regulation system. The power battery voltage regulation system includes a power battery, a switch module, a charging and discharging interface, and a motor. The switch module includes a first switch, a second switch, a third switch, a fourth switch, a fifth switch, a first bridge arm group, and a second bridge arm. Each bridge arm in the first bridge arm group and the second bridge arm includes an upper bridge arm and a lower bridge arm, joints between the upper bridge arms and the lower bridge arms of the bridge arms in the first bridge arm group are connected to all electrical inductors in the motor in one-to-one correspondence, and a joint between the upper bridge arm and the lower bridge arm of the second bridge arm is connected to a three-phase center point of the motor. One terminal of the first switch is connected to a positive electrode of the power battery, the other terminal of the first switch is connected to one terminal of the third switch and connected to all the electrical inductors in the motor via the upper bridge arms in the first bridge arm group, the other terminal of the third switch is connected to one terminal of the fourth switch and connected to the three-phase center point of the motor via the upper bridge arm in the second bridge arm, and the other terminal of the fourth switch is connected to a positive electrode of the charging and discharging interface. One terminal of the second switch is connected to a negative electrode of the power battery; the other terminal of the second switch is connected to one terminal of the fifth switch, connected to all the inductors in the motor via the lower bridge arms in the first bridge arm group, and connected to the three-phase center point of the motor via the lower bridge arm in the second bridge arm; and the other terminal of the fifth switch is connected to a negative electrode of the charging and discharging interface.

The power battery voltage regulation system provided in the embodiments of this application fully considers voltage regulation requirements for charging and discharging of the power battery under different circumstances. A switch is disposed at a critical position in a charge and discharge loop of the power battery, and loops for direct charging, boost charging, boost discharging, and buck discharging are formed in a same circuit structure by controlling different switches to be turned on or turned off, so that charging and discharging voltages of the power battery may be flexibly regulated without changing the circuit structure to meet charging or discharging voltage requirements of the power battery in different scenarios.

According to a fourth aspect, this application provides a control apparatus for power battery voltage regulation system, including a processor configured to perform the control method according to any one of the embodiments of the first aspect or the control method according to any one of the embodiments of the second aspect.

According to a fifth aspect, this application provides a motive apparatus, including the power battery voltage regulation system according to the third aspect, where the power battery voltage regulation system is configured to charge or discharge the power battery, and the power battery is configured to provide electrical energy to the motive apparatus.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic diagram depicting an application architecture of a charging method according to an embodiment of this application;
FIG. 2 is a schematic block diagram of a power battery voltage regulation system according to an embodiment of this application;
FIG. 3 is a schematic flowchart of a control method for power battery voltage regulation system according to an embodiment of this application;
FIG. 4 is a schematic diagram of a charge loop of power battery voltage regulation system according to an embodiment of this application;
FIG. 5 is a schematic diagram of another charge loop of power battery voltage regulation system according to an embodiment of this application;
FIG. 6 is a schematic flowchart of another control method for power battery voltage regulation system according to an embodiment of this application;
FIG. 7 is a schematic diagram of another charge loop of power battery voltage regulation system according to an embodiment of this application;
FIG. 8 is a schematic flowchart of another control method for power battery voltage regulation system according to an embodiment of this application;
FIG. 9 is a schematic diagram of another charge loop of power battery voltage regulation system according to an embodiment of this application;
FIG. 10 is a schematic diagram of another charge loop of power battery voltage regulation system according to an embodiment of this application;
FIG. 11 is a schematic flowchart of another control method for power battery voltage regulation system according to an embodiment of this application;
FIG. 12 is a schematic diagram of another charge loop of power battery voltage regulation system according to an embodiment of this application; and
FIG. 13 is a schematic block diagram of a control apparatus for power battery voltage regulation system 10 according to an embodiment of this application.

The accompanying drawings are not drawn to scale.

### DETAILED DESCRIPTION OF EMBODIMENTS

The following further describes the embodiments of this application in detail with reference to the accompanying drawings and implementations. The following detailed description of embodiments and the accompanying drawings are intended to illustrate the principle of this application rather than to limit the scope of this application, meaning this application is not limited to the embodiments as described.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

With the development of battery technologies, various performances of the power batteries are constantly improving, and especially voltages of the power batteries have been significantly increased. For such new power battery with a high voltage, only a charging device that can output a corresponding high voltage can charge such new power battery. However, most of the charging devices currently used can only charge conventional power batteries with a low voltage, and the maximum output voltage of such charging devices cannot provide the voltage required by the new power batteries. If all charging devices are replaced to adapt to the new power batteries, the original charging devices are wasted and unnecessary costs are increased.

In addition, with the development of various load devices (for example, vehicle user equipment), output voltages of power batteries required by different load devices are also different. Therefore, a method is needed so that the power battery can more flexibly regulate the output voltages in a discharging process to satisfy requirements of different load devices.

In view of this, an embodiment of this application provides a power battery voltage regulation system and a control method and control apparatus thereof. The power battery voltage regulation system includes a power battery, a switch module, a charging and discharging interface, and a motor. Direct charging or boost charging can be implemented in different scenarios or boost discharging or buck discharging can be implemented in different scenarios by controlling different switches in the switch module to be turned on or turned off.

The power battery in the embodiments of this application may be a lithium-ion battery, a lithium-metal battery, a lead-acid battery, a nickel-cadmium battery, a nickel-hydrogen battery, a lithium-sulfur battery, a lithium-air battery, or a sodium-ion battery, which is not limited herein. In terms of the scale, the battery in the embodiments of this application may be a battery cell, a battery module, or a battery pack, which is not limited herein. In terms of application scenarios, the battery can be used in motive apparatuses such as automobiles and ships. For example, the battery can be used in a motor vehicle to power a motor of the motor vehicle as a power source for the electric vehicle. The battery can also power other electric devices in the electric vehicle, such as powering a vehicular air conditioner, a vehicular player, and the like.

For ease of description, the following describes an embodiment in which a power battery is used in a new energy vehicle (a motor vehicle).

A drive motor as well as a control system thereof is a core component of a new energy vehicle, with a drive characteristic that determines a main performance index of the vehicle during traveling. A motor drive system of the new energy vehicle mainly includes an electromotor (that is, a motor), a power converter, a motor controller (for example, an inverter), various detection sensors, and a power supply. The motor is a rotary electromagnetic machine that operates on the electromagnetic induction principle, used to convert electrical energy into mechanical energy. When operating, the motor takes electric power from an electric system and outputs mechanical power to a mechanical system.

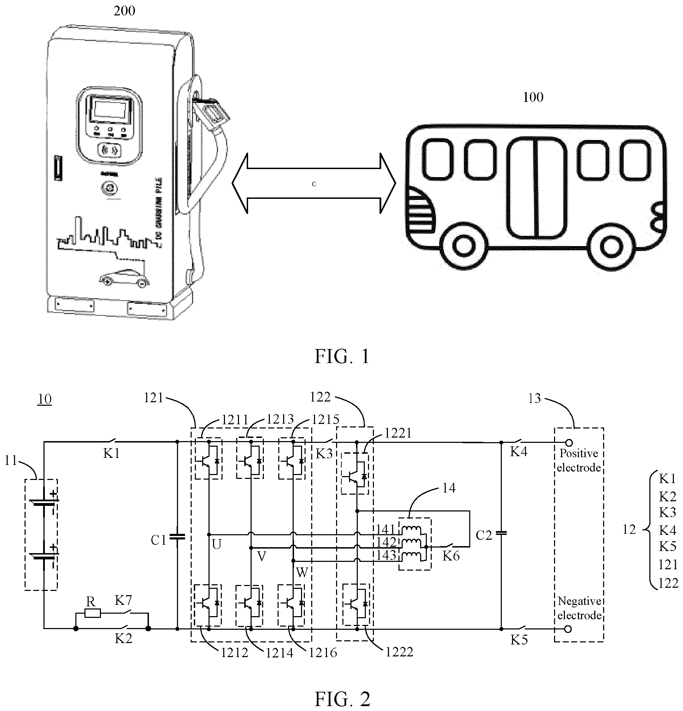

FIG. 1 is a schematic diagram depicting an application architecture of a charging method according to an embodiment of this application. The application architecture includes a battery management system (Battery Management System, BMS) 100 and a charging pile 200. The BMS 100 may be connected to the charging pile 200 via a communication line to exchange information with the charging pile 200. For example, the communication line may be a controller area network (Controller Area Network, CAN) communication line or a daisy chain communication line.

The BMS 100 is a BMS of a power battery, and the power battery serves as a power source for an electric apparatus. Optionally, the power battery may be a power storage battery. In terms of types of battery, the power battery may be a lithium-ion battery, a lithium-metal battery, a lead-acid battery, a nickel-cadmium battery, a nickel-hydrogen battery, a lithium-sulfur battery, a lithium-air battery, or a sodium-ion battery, which is not limited herein. In terms of the scale of battery, the power battery in the embodiments of this application may be a cell/battery cell, and may alternatively be a battery module or a battery pack, which is not limited herein. Optionally, the electric apparatus may be a vehicle, a ship, a spacecraft, or the like, which is not limited in the embodiments of this application. The BMS is a control system for the safe use of the power battery, implementing functions such as charge and discharge management, high-voltage control, battery protection, battery data collection, and battery status evaluation. The BMS may be integrated with the power battery in a same device/apparatus, or the BMS may be provided as an independent device/apparatus outside the power battery.

A charging pile 200, also known as a charging machine, is an apparatus for charging the power battery. The charging pile can output charging power according to charging requirements of the BMS 100 to charge the power battery. For example, the charging pile 200 can output a voltage and a current according to a requested voltage and a requested current sent by the BMS 100.

To meet charging voltage requirements of the power battery in different scenarios, this application provides a power battery voltage regulation system. As shown in FIG. 2, the power battery voltage regulation system 10 includes a power battery 11, a switch module 12, a charging and discharging interface 13, and a motor 14. The switch module 12 includes a first switch K1, a second switch K2, a third switch K3, a fourth switch K4, a fifth switch K5, a first bridge arm group 121, and a second bridge arm 122. Each bridge arm in the first bridge arm group 121 and the second bridge arm 122 includes an upper bridge arm and a lower bridge arm, joints between the upper bridge arms and the lower bridge arms of the bridge arms in the first bridge arm group 121 are connected to all inductors in the motor 14 in one-to-one correspondence, and a joint between the upper bridge arm and the lower bridge arm of the second bridge arm 122 is connected to a three-phase center point of the motor 14. One terminal of the first switch K1 is connected to a positive electrode of the power battery 11, the other terminal of the first switch K1 is connected to one terminal of the third switch K3 and connected to all the inductors in the motor 14 via the upper bridge arms in the first bridge arm group 121, the other terminal of the third switch K3 is connected to one terminal of the fourth switch K4 and connected to the three-phase center point of the motor 14 via the upper bridge arm in the second bridge arm 122, and the other terminal of the fourth switch K4 is connected to a positive electrode of the charging and discharging interface 13. One terminal of the second switch K2 is connected to a negative electrode of the power battery 11; the other terminal of the second switch K2 is connected to one terminal of the fifth switch K5, connected to all the inductors in the motor 14 via the lower bridge arms in the first bridge arm group 121, and connected to the three-phase center point of the motor 14 via the lower bridge arm in the second bridge arm 122; and the other terminal of the fifth switch K5 is connected to a negative electrode of the charging and discharging interface 13.

The first switch K1, the second switch K2, the third switch K3, the fourth switch K4, and the fifth switch K5 in the switch module 12 may be relay switches, and a control module controls these switches to be turned on or turned off, forming different loops. The first switch K1 is configured to turn on or turn off connection between all components of the power battery voltage regulation system 10 except for the power battery 11 and a positive electrode of a battery. The second switch K2 is configured to turn on or turn off connection between all components of the power battery voltage regulation system 10 except for the power battery 11 and a negative electrode of the battery. The third switch K3 is configured to turn on or turn off connection between the second bridge arm 122 and the charging and discharging interface 13, connection between the second bridge arm 122 and the first bridge arm group 121, and connection between the second bridge arm 122 and the power battery 11. The fourth switch K4 is configured to turn on or turn off connection between all components of the power battery voltage regulation system 10 except for the charging and discharging interface 13 and a positive electrode of the charging and discharging interface 13. The fifth switch K5 is configured to turn on or turn off connection between all components of the power battery voltage regulation system 10 except for the charging and discharging interface 13 and a negative electrode of the charging and discharging interface 13.

The first bridge arm group 121 and the second bridge arm 122 may be implemented by an inverter in a driving system of the motor 14, and the inverter may be implemented by using a bridge arm switch of an insulated gate bipolar transformer (Insulated Gate Bipolar Transistor, IGBT). A quantity of the bridge arms in the first bridge arm group 121 is the same as a quantity of inductors in the motor 14. For example, if the motor 14 is a three-phase motor 14, the inverter includes three phase bridge arms, including a U-phase bridge arm, a V-phase bridge arm, and a W-phase bridge arm. Each phase bridge arm in the three phase bridge arms has an upper bridge arm and a lower bridge arm. The upper bridge arm and the lower bridge arm are each provided with a switch unit. That is, the first bridge arm group 121 includes an upper bridge arm switch 1211 and a lower bridge arm switch 1212 in the U-phase bridge arm, an upper bridge arm switch 1213 and a lower bridge arm switch 1214 in the V-phase bridge arm, and an upper bridge arm switch 1215 and a lower bridge arm switch 1216 in the W-phase bridge arm. The second bridge arm 122 also has an upper bridge arm and a lower bridge arm. The upper bridge arm and the lower bridge arm are each provided with a switch unit, that is, the second bridge arm 122 includes an upper bridge arm switch 1221 and a lower bridge arm switch 1222.

The motor 14 may include a plurality of inductors. Using a three-phase motor 14 as an example, the three-phase motor 14 may include three inductors, specifically including: an inductor 141 connected to the U-phase bridge arm, an inductor 142 connected to the V-phase bridge arm, and an inductor 143 connected to the W-phase bridge arm. One terminal of the inductor 141 is connected to a joint between the upper bridge arm and the lower bridge arm in the U-phase bridge arm, one terminal of the inductor 142 is connected to a joint of the upper bridge arm and the lower bridge arm in the V-phase bridge arm, and one terminal of the inductor 143 is connected to a joint of the upper bridge arm and the lower bridge arm in the W-phase bridge arm. The other terminal of the inductor 141, the other terminal of the inductor 142, and the other terminal of the inductor 143 are connected to a joint, and the joint is a three-phase center point of the motor 14.

It should be noted that the motor 14 is not limited to a three-phase motor 14, and may alternatively be a six-phase motor 14 and the like. Correspondingly, the six-phase motor 14 may include a six-phase bridge arm.

Optionally, the power battery voltage regulation system 10 may further be provided with a sixth switch K6, a seventh switch K7, a first capacitor C1, a second capacitor C2, and a resistor R.

The sixth switch K6 is disposed between the three-phase center point of the motor 14 and the joint between the upper bridge arm and the lower bridge arm of the second bridge arm 122, and configured to turn off or turn on high-voltage connection between the three-phase center point of the motor 14 and the joint between the upper bridge arm and the lower bridge arms of the second bridge arm 122. In this embodiment of this application, the sixth switch K6 may always be in an on state.

The seventh switch K7 is connected to the resistor R in series and connected to two terminals of the second switch K2 in parallel. One terminal of the first capacitor C1 is connected to a positive electrode of the power battery 11 via the first switch K1, and the other terminal is connected to a negative electrode of the power battery 11 via the second switch K2. One terminal of the second capacitor C2 is connected to a positive electrode of the charging and discharging interface 13 via the fourth switch K4, and the other terminal is connected to a negative electrode of the charging and discharging interface 13 via the fifth switch K5. When a high-voltage connection of the power battery voltage regulation system 10 is established, the first switch K1 and the seventh switch K7 may be turned on first to pre-charge the first capacitor C 1 and the second capacitor C2, avoiding damage to a circuit caused by a high voltage. Specifically, a preset time at which the seventh switch K7 is turned on may be set. After the preset time is over, the second switch K2 may be turned on and the seventh switch K7 may be turned off. In this embodiment of this application, before the second switch K2 may be turned on, the seventh switch K7 may be first turned on in a preset time. After the preset time is over, the second switch K2 may be turned on and the seventh switch K7 may be turned off.

The second capacitor C2 is configured to stabilize an input voltage of the charging and discharging interface 13, and take a peak voltage of the second bridge arm 122 when the second bridge arm 122 is turned off, avoiding damage to the second bridge arm 122. Both the first capacitor C1 and the second capacitor C2 can implement voltage stabilization and clutter filtration.

The power battery voltage regulation system 10 provided in the embodiments of this application fully considers voltage regulation requirements for charging and discharging of the power battery 11 under different circumstances. A switch is disposed at a critical position in a charge and discharge loop of the power battery 11, and loops for direct charging, boost charging, boost discharging, and buck discharging are formed in one circuit structure by controlling different switches to be turned on or turned off, so that charging and discharging voltages of the power battery 11 may be flexibly regulated without changing the circuit structure to meet charging or discharging voltage requirements of the power battery 11 in different scenarios.

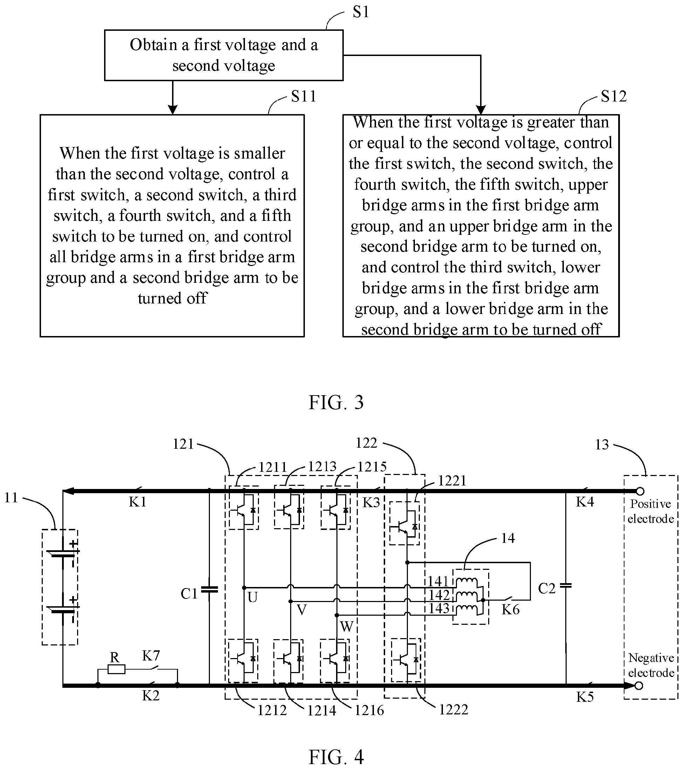

On the basis of the foregoing power battery voltage regulation system 10, according to some embodiments of this application, this application further provides a control method for power battery voltage regulation system 10, as shown in FIG. 3 to FIG. 7.

FIG. 3 is a schematic flowchart of a control method for power battery voltage regulation system 10 according to the embodiments of this application, showing a schematic process of the power battery voltage regulation system 10 in a charging process. The control method for power battery voltage regulation system 10 includes the following steps:

S 1: Obtain a first voltage and a second voltage, where the first voltage is a voltage of the power battery 11, the second voltage is a maximum output voltage of a charging device, and the charging device is configured to connect to the charging and discharging interface 13.

S 11: When the first voltage is smaller than the second voltage, control the first switch K1, the second switch K2, the third switch K3, the fourth switch K4, and the fifth switch K5 to be turned on, and control all the bridge arms in the first bridge arm group 121 and the second bridge arm 122 to be turned off. Alternatively, S12: When the first voltage is greater than or equal to the second voltage, control the first switch K1, the second switch K2, the fourth switch K4, the fifth switch K5, the upper bridge arms in the first bridge arm group 121, and the upper bridge arm in the second bridge arm 122 to be turned on, and control the third switch K3, the lower bridge arms in the first bridge arm group 121, and the lower bridge arm in the second bridge arm 122 to be turned off.

In the embodiments of this application, the foregoing steps may be performed by a control module. The control module obtains the first voltage and the second voltage, that is, the control module obtains a voltage of the power battery 11 and the maximum output voltage of a charging device, and compares the voltage of the power battery 11 and the maximum output voltage of the charging device to determine a charging method for the power battery 11. The charging device is a device that provides electrical energy to the power battery 11. For example, the charging device may be a charging pile.

When the first voltage is smaller than the second voltage, the charging device can provide sufficient voltage for a charging process of the power battery 11, so the charging device can directly charge the power battery 11 without regulating the charging voltage. Specifically, the control module controls the first switch K1, the second switch K2, the third switch K3, the fourth switch K4, and the fifth switch K5 in the power battery voltage regulation system 10 to be turned on, and controls all the bridge arms in the first bridge arm group 121 and the second bridge arm 122 to be turned off, to form a loop for direct charging as shown in FIG. 4.

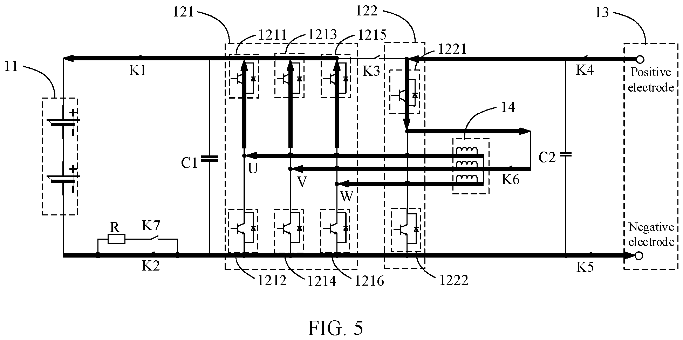

When the first voltage is greater than or equal to the second voltage, the charging device cannot provide sufficient voltage for the charging process of the power battery 11, so the charging voltage of the power battery 11 needs to increase. Specifically, the first switch K1, the second switch K2, the fourth switch K4, the fifth switch K5, the upper bridge arms in the first bridge arm group 121, and the upper bridge arm in the second bridge arm 122 are controlled to be turned on, and the third switch K3, the lower bridge arms in the first bridge arm group 121, and the lower bridge arm in the second bridge arm 122 are controlled to be turned off, to form a loop for boost charging as shown in FIG. 5. In FIG. 5, the charging device and the motor 14 pre-storing energy jointly provide electrical energy to the power battery 11. In other words, the voltage provided by the charging device is superimposed with the voltage provided by the motor 14, and the superimposed voltage is greater than the voltage of the power battery 11. Then the power battery 11 can be charged. The motor 14 can pre-store energy by using a circuit in the power battery voltage regulation system 10, or an external device can provide energy to the motor 14.

Optionally, an apparatus for obtaining the first voltage and the second voltage may be a BMS in the control module, and an apparatus for controlling the switches in the switch module 12 to be turned on or turned off may be a micro control unit (micro control unit, MCU) in the control module. The BMS can compare the obtained first voltage and second voltage, to determine a charging method and communicate with the MCU. For example, when the first voltage is smaller than the second voltage, the BMS sends first information to the MCU, and the first information is used to indicate that a direct charging method is used for charging. The MCU can control a corresponding switch to be turned on or turned off based on the first information, forming a charge loop for direct charging.

Similarly, when the first voltage is greater than or equal to the second voltage, the BMS sends second information to the MCU, and the second information is used to indicate that a boost charging method is used for charging. The MCU can control a corresponding switch to be turned on or turned off based on the second information, forming a charge loop for boost charging. At different stages of the charging process, charging voltages required for the power battery may also vary. Therefore, when the BMS sends the second information to the MCU, the BMS can simultaneously send a target voltage of the power battery to the MCU. The target voltage is a voltage required for a current charging stage of the power battery, which may be the same as or different from the first voltage obtained by the BMS in step S 1.

In the control method for power battery voltage regulation system 10 provided in the embodiments of this application, under different circumstances, the charging device can charge a power battery 11 with a voltage lower than the maximum output voltage of the charging device, and also charge a power battery 11 with a voltage higher than the maximum output voltage of the charging device by controlling different switches in a circuit structure to be turned on or turned off, without changing an existing charging facility. In the control method, the charging voltage of the power battery 11 can be flexibly regulated in different scenarios, so that compatibility with an external charging device can be achieved, and a charging process of the power battery 11 is not limited by the maximum output voltage of the charging device.

According to some embodiments of this application, optionally, when the first voltage is greater than or equal to the second voltage, the control method further includes the following step: S121: In a first duration, control the fourth switch K4, the fifth switch K5, the lower bridge arms in the first bridge arm group 121, and the upper bridge arm in the second bridge arm 122 to be turned on, and control the third switch K3, the upper bridge arms in the first bridge arm group 121, and the lower bridge arm in the second bridge arm 122 to be turned off.

Step S12 may specifically be as follows: S 122: In a second duration, control the first switch K1, the second switch K2, the fourth switch K4, the fifth switch K5, the upper bridge arms in the first bridge arm group 121, and the upper bridge arm in the second bridge arm 122 to be turned on, and control the third switch K3, the lower bridge arms in the first bridge arm group 121, and the lower bridge arm in the second bridge arm 122 to be turned off.

A first period includes the first duration and the second duration, and in the first period, the first duration is before the second duration.

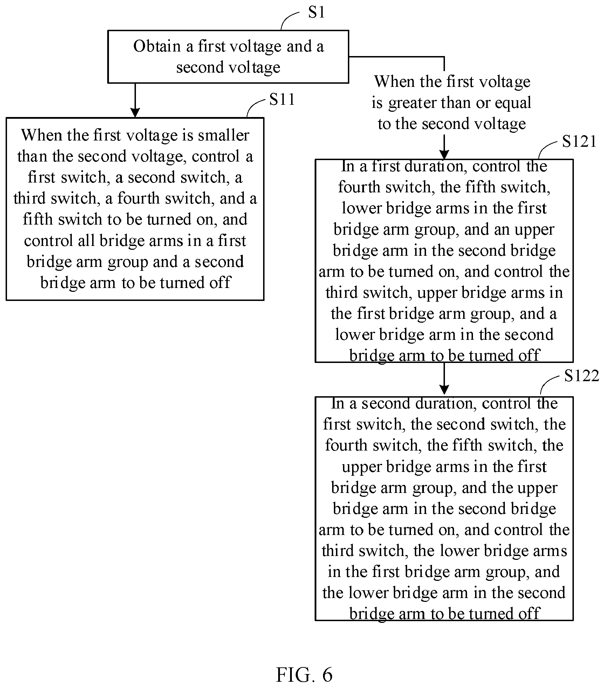

FIG. 6 is a schematic flowchart of another control method for power battery voltage regulation system 10 according to an embodiment of this application, that is, a control method in a case that boost charging is performed on the power battery 11.

When the first voltage is greater than or equal to the second voltage, the charging device and the motor 14 pre-storing energy jointly provide electrical energy to the power battery 11. The energy pre-stored in the motor 14 may be provided by a circuit of the power battery voltage regulation system 10.

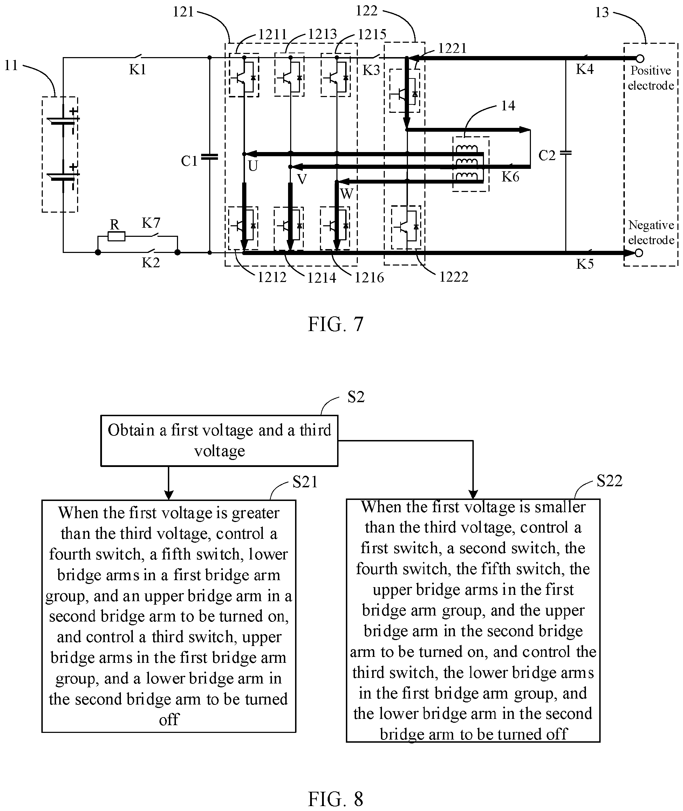

Specifically, the control module can control the fourth switch K4, the fifth switch K5, the lower bridge arms in the first bridge arm group 121, and the upper bridge arm in the second bridge arm 122 to be turned on, and control the first switch K1, the second switch K2, the third switch K3, the upper bridge arms in the first bridge arm group 121, and the lower bridge arm in the second bridge arm 122 to be turned off, to form a loop as shown in FIG. 7. In FIG. 7, the charging device only provides electrical energy to the motor 14, and the motor 14 stores energy by using its own inductors.

After storing energy in the first duration by using the loop as shown in FIG. 7, the motor 14 can form a loop for boost charging in the second duration, and charge the power battery 11 together with the charging device. Specifically, step S122 is performed by controlling the switches to be turned on or turned off in step S12 in the second duration. A first period includes the first duration and the second duration. In one first period, energy is stored for the motor 14 in the first duration, and then an increased charging voltage is provided for the power battery 11 in the second duration.

In the embodiments provided in this application, in a case that a circuit structure is not changed, the charging voltage of the power battery 11 can be flexibly regulated according to a relationship between the charging device and the voltage of the power battery 11. In addition, a circuit structure of the power battery voltage regulation system 10 is used to provide energy to the motor 14, thereby implementing boost charging of the power battery 11 by controlling different switches in a same circuit to be turned on or turned off.

According to some embodiments of this application, optionally, the first duration and second duration are alternately distributed.

In a boost charging process of the power battery 11, loops formed in the first duration and the second duration respectively can be quickly alternatively turned on multiple times in a duration, so that after the charging voltage of the power battery 11 increases to a predetermined value, the power battery 11 can be charged continuously.

To control the switches to be turned on or turned off as fewer as possible and prolong service life of the switches, in a time in which the first duration and the second duration are alternatively distributed, the first switch K1 and the second switch K2 remain in an on state in a time in which the first duration is distributed, while the upper bridge arms and the lower bridge arms in the first bridge arm group 121 are controlled to be turned on alternatively, so as to turn on the current loops formed in the first duration and the second duration alternatively. In the loop shown in FIG. 7, when the first switch K1 and the second switch K2 remain in an on state, it does not affect a direction of the current in the loop.

In a charging process of the power battery 11, the first duration and the second duration are alternately distributed, so that continuous charging can be implemented after a voltage increases, ensuring that the charging process is undisrupted.

According to some embodiments of this application, this application further provides another control method for power battery voltage regulation system 10. As shown in FIG. 8 to FIG. 12, based on the foregoing power battery voltage regulation system 10, the control method includes the following steps:
S2: Obtain a first voltage and a third voltage, where the first voltage is a voltage of the power battery 11, the third voltage is a requested voltage of a load device, and the load device is configured to connect to the charging and discharging interface 13.
S21: When the first voltage is greater than the third voltage, control the fourth switch K4, the fifth switch K5, the lower bridge arms in the first bridge arm group 121, and the upper bridge arm in the second bridge arm 122 to be turned on, and control the third switch K3, the upper bridge arms in the first bridge arm group 121, and the lower bridge arm in the second bridge arm 122 to be turned off. Alternatively, S22: When the first voltage is smaller than the third voltage, control the first switch K1, the second switch K2, the fourth switch K4, the fifth switch K5, the upper bridge arms in the first bridge arm group 121, and the upper bridge arm in the second bridge arm 122 to be turned on, and control the third switch K3, the lower bridge arms in the first bridge arm group 121, and the lower bridge arm in the second bridge arm 122 to be turned off.

FIG. 8 is a schematic flowchart of another control method for power battery voltage regulation system 10 according to an embodiment of this application, showing a schematic flowchart of a power battery voltage regulation system 10 in a discharge process. The control module obtains the first voltage and the third voltage, that is, the control module obtains a voltage of the power battery 11 and a requested voltage of a load device, and compares the voltage of the power battery 11 and the requested voltage of the load device to determine a discharging method for the power battery 11. The load device is a device that consumes electrical energy to operate, for example, the load device may be vehicle user equipment.

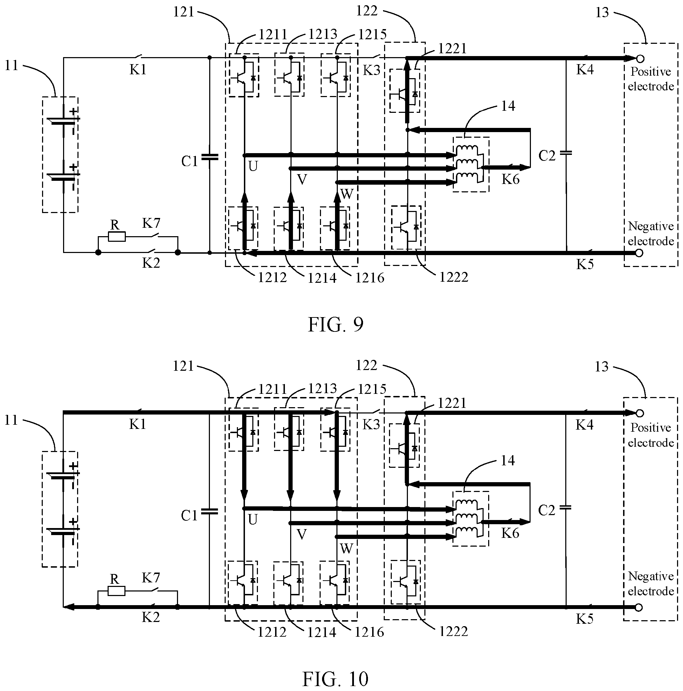

When the first voltage is greater than the third voltage, the voltage of the power battery 11 is greater than the requested voltage of the load device, and an output voltage of a circuit needs to be reduced, so that the requested voltage of the load device is matched. Specifically, the fourth switch K4, the fifth switch K5, the lower bridge arms in the first bridge arm group 121, and the upper bridge arm in the second bridge arm 122 are controlled to be turned on, and the first switch K1, the second switch K2, the third switch K3, the upper bridge arms in the first bridge arm group 121, and the lower bridge arm in the second bridge arm 122 are controlled to be turned off, so as to form a loop for buck discharging as shown in FIG. 9. In FIG. 9, only the motor 14 pre-storing energy provides electrical energy to the load device, and a voltage matching the requested voltage of the load device is provided by controlling the energy stored in the motor 14.

When the first voltage is smaller than the third voltage, the voltage of the power battery 11 is smaller than the requested voltage of the load device, and an output voltage of a circuit needs to be reduced, so that the requested voltage of the load device is matched. Specifically, the first switch K1, the second switch K2, the fourth switch K4, the fifth switch K5, the upper bridge arms in the first bridge arm group 121, and the upper bridge arm in the second bridge arm 122 are controlled to be turned on, and the third switch K3, the lower bridge arms in the first bridge arm group 121, and the lower bridge arm in the second bridge arm 122 are controlled to be turned off, so as to form a loop for boost discharging as shown in FIG. 10. In FIG. 10, the power battery 11 and the motor 14 pre-storing energy jointly provide electrical energy to the load device. In other words, the voltage provided by the power battery 11 is superimposed with the voltage provided by the motor 14, and the superimposed voltage is matched with the requested voltage of the load device. Then, electrical energy can be provided to the load device.

In the power battery voltage regulation system 10 provided in the embodiments of this application, the motor 14 can pre-store energy by using a circuit in the power battery voltage regulation system 10, or an external device can provide energy to the motor 14.

In another possible implementation, the control module can first turn on switches that do not affect a current loop, and only control some switches to be turned on or turned off to implement changes of the current loop. Specifically, when the power battery 11 needs to be discharged, the control module first controls the first switch K1, the second switch K2, the fourth switch K4, and the fifth switch K5 to be turned on while the other switches are turned off. Next, based on determination of the first voltage and the third voltage, when the first voltage is greater than the third voltage, the control module further controls the lower bridge arms in the first bridge arm group 121 and the upper bridge arm in the second bridge arm 122 to be turned on, and controls the upper bridge arms in the first bridge arm group 121 and the lower bridge arm in the second bridge arm 122 to be turned off, so as to form a loop for buck discharging; or when the first voltage is smaller than the third voltage, the control module further controls the upper bridge arms in the first bridge arm group 121 and the upper bridge arm in the second bridge arm 122 to be turned on, and controls the lower bridge arms in the first bridge arm group 121 and the lower bridge arm in the second bridge arm 122 to be turned off, so as to form a circuit for boost discharging. In other words, an execution order of the step in which the control module determines the first voltage and the third voltage and the step in which the control module controls the first switch K1, the second switch K2, the fourth switch K4, and the fifth switch K5 to be turned on is not limited.

Optionally, an apparatus for obtaining the first voltage and the third voltage may be a BMS in the control module, and an apparatus for controlling the switches in the switch module 12 to be turned on or turned off may be an MCU in the control module.

In a possible implementation, the BMS compares the obtained first voltage and the obtained third voltage to determine a charging method and communicates with the MCU. For example, when the first voltage is greater than the third voltage, the BMS sends third information to the MCU, and the third information is used to indicate that a buck discharging method is used for discharging. The MCU can control a corresponding switch to be turned on or turned off based on the third information, forming a discharge loop for buck discharging. Similarly, when the first voltage is smaller than the third voltage, the BMS sends fourth information to the MCU, and the fourth information is used to indicate that a boost discharging method is used for discharging. The MCU can control a corresponding switch to be turned on or turned off based on the fourth information, forming a discharge loop for boost discharging.

In another possible implementation, the BMS obtains the first voltage and the third voltage and communicates with the MCU. For example, the BMS can send fifth information to the MCU, and the fifth information is used to indicate that a loop for discharging is formed. The MCU receives the fifth information and controls the switches that do not affect a current loop, that is, the MCU controls the first switch K1, the second switch K2, the fourth switch K4, and the fifth switch K5 to be turned on while the other switches are turned off. In addition, the BMS determines a discharging method based on the first voltage and the third voltage, and uses the third information or the fourth information to indicate that the MCU controls a corresponding switch to be turned on or turned off, forming a corresponding loop for discharging.

In the control method for power battery voltage regulation system 10 provided in the embodiments of this application, under different circumstances, various load devices with different requested voltages are compatible without changing a circuit structure, so that the power battery voltage regulation system 10 can provide electrical energy to a load device with a requested voltage higher than a voltage of the power battery 11, and can also provide electrical energy to a load device with a requested voltage lower than the voltage of the power battery 11 by controlling different switches in the circuit structure to be turned on or turned off, regulating a discharging voltage of the power battery 11 flexibly in different scenarios and providing electrical energy to the various load devices.

According to some embodiments of this application, optionally, the control method provided in the embodiments further includesthe following step: S23: In a third duration, control the first switch K1, the second switch K2, the upper bridge arms in the first bridge arm group 121, and the lower bridge arm in the second bridge arm 122 to be turned on, and control the third switch K3, the lower bridge arms in the first bridge arm group 121, and the upper bridge arm in the second bridge arm 122 to be turned off.

Step S21 may specifically be as follows: S211: When the first voltage is greater than the third voltage, in a fourth duration, control the fourth switch K4, the fifth switch K5, the lower bridge arms in the first bridge arm group 121, and the upper bridge arm in the second bridge arm 122 to be turned on, and control the third switch K3, the upper bridge arms in the first bridge arm group 121, and the lower bridge arm in the second bridge arm 122 to be turned off.

A second period includes the third duration and the fourth duration, and in the second period, the third duration is before the fourth duration.

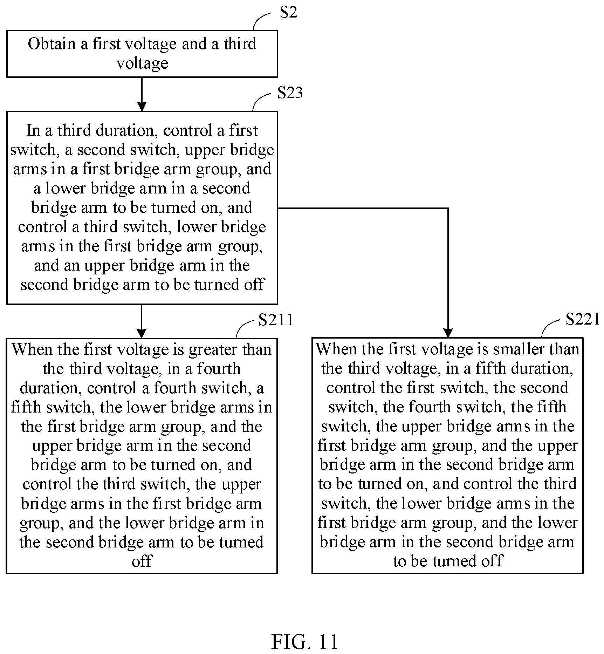

FIG. 11 is a schematic flowchart of another control method for power battery voltage regulation system 10 according to an embodiment of this application, that is, a control method in a case that buck charging is performed on the power battery 11.

In a loop formed by buck charging, only the motor 14 pre-storing energy provides electrical energy to the load device. The pre-stored energy in the motor 14 may be provided by a circuit of the power battery voltage regulation system 10.

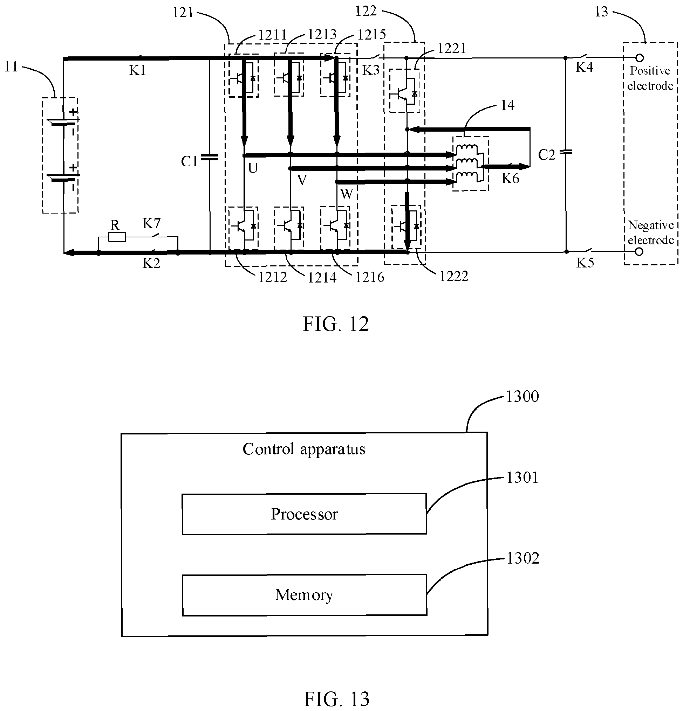

Specifically, the control module can control the first switch K1, the second switch K2, the upper bridge arms in the first bridge arm group 121, and the lower bridge arm in the second bridge arm 122 to be turned on, and control the third switch K3, the fourth switch K4, the fifth switch K5, the lower bridge arms in the first bridge arm group 121, and the upper bridge arm in the second bridge arm 122 to be turned off, so as to form a loop as shown in FIG. 12. In FIG. 12, the power battery 11 only provides electrical energy to the motor 14, and the motor 14 stores energy by using its own inductors.

After the motor 14 stores energy by using the loop shown in FIG. 12 in the third duration, a loop for buck discharging may be formed in the fourth duration, and the motor 14 pre-storing energy provides electrical energy to the load device. Specifically, step S211 is performed by controlling the switches to be turned on or turned off in step S21 in the fourth duration. A second period includes the third duration and the fourth duration. In one second period, energy is stored for the motor 14 in the third period, and then a decreased discharging voltage is provided to the load device in the fourth duration.

In the embodiments provided in this application, in a case that a circuit structure is not changed, an output voltage can be flexibly regulated as required by the load device, and in addition, a circuit structure of the power battery voltage regulation system 10 is configured to provide energy to the motor 14, thereby implementing buck discharging of the power battery 11 by controlling different switches in one circuit to be turned on or turned off.

According to some embodiments of this application, optionally, the control method provided in the embodiments further includes S23: in a third duration, controlling the first switch K1, the second switch K2, the upper bridge arms in the first bridge arm group 121, and the lower bridge arm in the second bridge arm 122 to be turned on, and controlling the third switch K3, the lower bridge arms in the first bridge arm group 121, and the upper bridge arm in the second bridge arm 122 to be turned off.

Step S22 may specifically be S221: When the first voltage is smaller than the third voltage, in a fifth duration, control the first switch K1, the second switch K2, the fourth switch K4, the fifth switch K5, the upper bridge arms in the first bridge arm group 121, and the upper bridge arm in the second bridge arm 122 to be turned on, and control the third switch K3, the lower bridge arms in the first bridge arm group 121, and the lower bridge arm in the second bridge arm 122 to be turned off.

A third period includes the third duration and the fifth duration, and in the third period, the third duration is before the fifth duration.

Step S23 has been described in detail and is not repeated herein. After the motor 14 stores energy by using the loop shown in FIG. 12 in the third duration, a loop for boost discharging may be formed in the fifth duration, and the power battery 11 and the motor 14 pre-storing energy jointly provides electrical energy to the load device. Specifically, the switches are controlled to be turned on or turned off in S22, and similar operations are performed in the fifth duration in S221. A third period includes the third duration and the fifth duration. In one third period, energy is stored for the motor 14 in the third duration, and then an increased discharging voltage is provided for the load device in the fifth duration.

In the embodiments provided in this application, in a case that a circuit structure is not changed, an output voltage can be flexibly regulated as required by the load device. In addition, a circuit structure of the power battery voltage regulation system 10 is used to provide energy to the motor 14, thereby implementing boost discharging of the power battery 11 by controlling different switches in one circuit to be turned on or turned off.

According to some embodiments of this application, optionally, the third duration and the fourth duration are alternately distributed.

The motor 14 stores energy in the third duration and provides electrical energy to the load device in the fourth duration. Loops formed respectively in the third duration and the fourth duration can be quickly turned on alternatively multiple times in a duration, so that after an output voltage provided by the motor 14 reaches a predetermined value, the motor 14 can provide electrical energy to the load device continuously.

To control the switches to be turned on or turned off as fewer as possible and extend service life of the switches, in a time in which the third duration and the fourth duration are alternatively distributed, the first switch K1, the second switch K2, the fourth switch K4, and the fifth switch K5 remain in an on state, while in a time in which the third duration is distributed, the upper bridge arms in the first bridge arm group 121 and the lower bridge arm in the second bridge arm 122 are controlled to be turned on, the lower bridge arms in the first bridge arm group 121 and the upper bridge arm in the second bridge arm 122 are controlled to be turned off; and in a time in which the fourth duration is distributed, the lower bridge arms in the first bridge arm group 121 and the upper bridge arm in the second bridge arm 122 are controlled to be turned on, and the upper bridge arms in the first bridge arm group 121 and the lower bridge arm in the second bridge arm 122 are controlled to be turned off. In the loop formed in the third duration or the fourth duration, when the first switch K1, the second switch K2, the fourth switch K4, and the fifth switch K5 remain in an on state, a current direction in the loop is not affected.

In a buck discharging process of the power battery 11, the third duration and the fourth duration are alternately distributed, so that continuous discharging can be implemented after a voltage decreases, ensuring that the discharging process is undisrupted.

According to some embodiments of this application, optionally, the third duration and the fifth duration are alternately distributed.

The motor 14 stores energy in the third duration and provides electrical energy to the load device in the fifth duration. Loops formed respectively in the third duration and the fifth duration can be quickly turned on alternatively multiple times in a duration, so that after an output voltage jointly provided by the power battery 11 and the motor 14 reaches a predetermined value, the power battery 11 and the motor 14 can provide electrical energy to the load device continuously.

To control the switches to be turned on or turned off as fewer as possible and extend service life of the switches, in a time in which the third duration and the fifth duration are alternatively distributed, the first switch K1, the second switch K2, the fourth switch K4, and the fifth switch K5 remain in an on state, while in a time in which the third duration is distributed, the upper bridge arms in the first bridge arm group 121 and the lower bridge arm in the second bridge arm 122 are controlled to be turned on, the lower bridge arms in the first bridge arm group 121 and the upper bridge arm in the second bridge arm 122 are controlled to be turned off; and in a time in which the fifth duration is distributed, the upper bridge arms in the first bridge arm group 121 and the upper bridge arm in the second bridge arm 122 are controlled to be turned on, and the lower bridge arms in the first bridge arm group 121 and the lower bridge arm in the second bridge arm 122 are controlled to be turned off. In the loop formed in the third duration or the fifth duration, when the first switch K1, the second switch K2, the fourth switch K4, and the fifth switch K5 remain in an on state, a current direction in the loop is not affected.

In a boost discharging process of the power battery 11, the third duration and the fifth duration are alternately distributed, so that continuous discharging can be implemented after a voltage increases, ensuring that the discharging process is undisrupted.

According to some embodiments of this application, this application further provides a control apparatus for power battery voltage regulation system 10, including a processor configured to perform the methods according to the foregoing embodiments of this application.

FIG. 13 is a schematic block diagram of a control apparatus 1300 for power battery voltage regulation system 10 according to an embodiment of this application. As shown in FIG. 13, the control apparatus 1300 includes a processor 1301. Optionally, the control apparatus 1300 further includes a memory 1302. The memory 1302 is configured to store instructions, and the processor 1301 is configured to read the instructions and perform the methods according to the foregoing embodiments of this application based on the instructions.

Optionally, the processor 1301 may be a control module according to any one of the foregoing embodiments.

According to some embodiments of this application, this application further provides a motive apparatus. The motive apparatus includes a power battery voltage regulation system 10 provided in the embodiments of this application. The power battery voltage regulation system 10 is configured to charge or discharge the power battery 11, and the power battery 11 is configured to provide electrical energy to the motive apparatus.

Optionally, the motive apparatus may be a motor vehicle.

An embodiment of this application further provides a readable storage medium for storing a computer program. The computer program is configured to execute the methods according to the foregoing embodiments of this application.

Persons of ordinary skill in the art will appreciate that the units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art can employ a different method to implement the described functions for each particular application, but such implementations shall not be construed as going beyond the scope of this application.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

For the several embodiments provided in this disclosure, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be in electrical, mechanical, or other forms.

The units described as separate parts may or may not be physically separate. Components displayed as units may or may not be physical units, that is, they may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially or the part contributing to the prior art, or some of the technical solutions may be embodied in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A control method of power battery voltage regulation system (10), **characterized in that**
the power battery voltage regulation system (10) comprises a power battery (11), a switch module (12), a charging and discharging interface (13), and a motor (14);
the switch module (12) comprises a first switch (K1), a second switch (K2), a third switch (K3), a fourth switch (K4), a fifth switch (K5), a first bridge arm group (121), and a second bridge arm (122);
each bridge arm in the first bridge arm group (121) and the second bridge arm (122) comprises an upper bridge arm and a lower bridge arm, joints between the upper bridge arms and the lower bridge arms of the bridge arms in the first bridge arm group (121) are connected to all inductors in the motor (14) in one-to-one correspondence, and a joint between the upper bridge arm and the lower bridge arm of the second bridge arm (122) is connected to a three-phase center point of the motor (14);
one terminal of the first switch (K1) is connected to a positive electrode of the power battery (11), the other terminal of the first switch (K1) is connected to one terminal of the third switch (K3) and connected to all the inductors in the motor (14) via the upper bridge arms in the first bridge arm group (121), the other terminal of the third switch (K3) is connected to one terminal of the fourth switch (K4) and connected to the three-phase center point of the motor (14) via the upper bridge arm in the second bridge arm (122), and the other terminal of the fourth switch (K4) is connected to a positive electrode of the charging and discharging interface (13);
one terminal of the second switch (K2) is connected to a negative electrode of the power battery (11); the other terminal of the second switch (K2) is connected to one terminal of the fifth switch (K5), connected to all the inductors in the motor (14) via the lower bridge arms in the first bridge arm group (121), and connected to the three-phase center point of the motor (14) via the lower bridge arm in the second bridge arm (122); and the other terminal of the fifth switch (K5) is connected to a negative electrode of the charging and discharging interface (13); and
the control method comprises:
obtaining a first voltage and a second voltage, wherein the first voltage is a voltage of the power battery (11), the second voltage is a maximum output voltage of a charging device, and the charging device is configured to connect to the charging and discharging interface (13);
when the first voltage is smaller than the second voltage, controlling the first switch (K1), the second switch (K2), the third switch (K3), the fourth switch (K4), and the fifth switch (K5) to be turned on, and controlling all the bridge arms in the first bridge arm group (121) and the second bridge arm (122) to be turned off; or
when the first voltage is greater than or equal to the second voltage, controlling the first switch (K1), the second switch (K2), the fourth switch (K4), the fifth switch (K5), the upper bridge arms in the first bridge arm group (121), and the upper bridge arm in the second bridge arm (122) to be turned on, and controlling the third switch (K3), the lower bridge arms in the first bridge arm group (121), and the lower bridge arm in the second bridge arm (122) to be turned off.

2. The control method according to claim 1, **characterized in that** when the first voltage is greater than or equal to the second voltage, the control method further comprises:
in a first duration, controlling the fourth switch (K4), the fifth switch (K5), the lower bridge arms in the first bridge arm group (121), and the upper bridge arm in the second bridge arm (122) to be turned on, and controlling the third switch (K3), the upper bridge arms in the first bridge arm group (121), and the lower bridge arm in the second bridge arm (122) to be turned off;
the controlling the first switch (K1), the second switch (K2), the fourth switch (K4), the fifth switch (K5), the upper bridge arms in the first bridge arm group (121), and the upper bridge arm in the second bridge arm (122) to be turned on, and controlling the third switch (K3), the lower bridge arms in the first bridge arm group (121), and the lower bridge arm in the second bridge arm (122) to be turned off comprises:
in a second duration, controlling the first switch (K1), the second switch (K2), the fourth switch (K4), the fifth switch (K5), the upper bridge arms in the first bridge arm group (121), and the upper bridge arm in the second bridge arm (122) to be turned on, and controlling the third switch (K3), the lower bridge arms in the first bridge arm group (121), and the lower bridge arm in the second bridge arm (122) to be turned off; wherein
a first period comprises the first duration and the second duration, and in the first period, the first duration is before the second duration.

3. The control method according to claim 2, **characterized in that** the first duration and second duration are alternately distributed.

4. A control method for power battery voltage regulation system (10), **characterized in that**
the power battery voltage regulation system (10) comprises a power battery (11), a switch module (12), a charging and discharging interface (13), and a motor (14);
the switch module (12) comprises a first switch (K1), a second switch (K2), a third switch (K3), a fourth switch (K4), a fifth switch (K5), a first bridge arm group (121), and a second bridge arm (122);
each bridge arm in the first bridge arm group (121) and the second bridge arm (122) comprises an upper bridge arm and a lower bridge arm, joints between the upper bridge arms and the lower bridge arms of the bridge arms in the first bridge arm group (121) are connected to all inductors in the motor (14) in one-to-one correspondence, and a joint between the upper bridge arm and the lower bridge arm of the second bridge arm (122) is connected to a three-phase center point of the motor (14);
one terminal of the first switch (K1) is connected to a positive electrode of the power battery (11), the other terminal of the first switch (K1) is connected to one terminal of the third switch (K3) and connected to all the inductors in the motor (14) via the upper bridge arms in the first bridge arm group (121), the other terminal of the third switch (K3) is connected to one terminal of the fourth switch (K4) and connected to the three-phase center point of the motor (14) via the upper bridge arm in the second bridge arm (122), and the other terminal of the fourth switch (K4) is connected to a positive electrode of the charging and discharging interface (13);
one terminal of the second switch (K2) is connected to a negative electrode of the power battery (11); the other terminal of the second switch (K2) is connected to one terminal of the fifth switch (K5), connected to all the inductors in the motor (14) via the lower bridge arms in the first bridge arm group (121), and connected to the three-phase center point of the motor (14) via the lower bridge arm in the second bridge arm (122); and the other terminal of the fifth switch (K5) is connected to a negative electrode of the charging and discharging interface (13); and
the control method comprises:
obtaining a first voltage and a third voltage, wherein the first voltage is a voltage of the power battery (11), the third voltage is a requested voltage of a load device, and the load device is configured to connect to the charging and discharging interface (13);
when the first voltage is greater than the third voltage, controlling the fourth switch (K4), the fifth switch (K5), the lower bridge arms in the first bridge arm group (121), and the upper bridge arm in the second bridge arm (122) to be turned on, and controlling the third switch (K3), the upper bridge arms in the first bridge arm group (121), and the lower bridge arm in the second bridge arm (122) to be turned off; or
when the first voltage is smaller than the third voltage, controlling the first switch (K1), the second switch (K2), the fourth switch (K4), the fifth switch (K5), the upper bridge arms in the first bridge arm group (121), and the upper bridge arm in the second bridge arm (122) to be turned on, and controlling the third switch (K3), the lower bridge arms in the first bridge arm group (121), and the lower bridge arm in the second bridge arm (122) to be turned off.

5. The control method according to claim 4, **characterized in that** the control method further comprises:
in a third duration, controlling the first switch (K1), the second switch (K2), the upper bridge arms in the first bridge arm group (121), and the lower bridge arm in the second bridge arm (122) to be turned on, and controlling the third switch (K3), the lower bridge arms in the first bridge arm group (121), and the upper bridge arm in the second bridge arm (122) to be turned off; and
when the first voltage is greater than the third voltage, the controlling the fourth switch (K4), the fifth switch (K5), the lower bridge arms in the first bridge arm group (121), and the upper bridge arm in the second bridge arm (122) to be turned on, and controlling the third switch (K3), the upper bridge arms in the first bridge arm group (121), and the lower bridge arm in the second bridge arm (122) to be turned off comprises:
when the first voltage is greater than the third voltage, in a fourth duration, controlling the fourth switch (K4), the fifth switch (K5), the lower bridge arms in the first bridge arm group (121), and the upper bridge arm in the second bridge arm (122) to be turned on, and controlling the third switch (K3), the upper bridge arms in the first bridge arm group (121), and the lower bridge arm in the second bridge arm (122) to be turned off; wherein
a second period comprises the third duration and the fourth duration, and in the second period, the third duration is before the fourth duration.

6. The control method according to claim 4, **characterized in that** the control method further comprises:
in a third duration, controlling the first switch (K1), the second switch (K2), the upper bridge arms in the first bridge arm group (121), and the lower bridge arm in the second bridge arm (122) to be turned on, and controlling the third switch (K3), the lower bridge arms in the first bridge arm group (121), and the upper bridge arm in the second bridge arm (122) to be turned off; and
when the first voltage is smaller than the third voltage, the controlling the first switch (K1), the second switch (K2), the fourth switch (K4), the fifth switch (K5), the upper bridge arms in the first bridge arm group (121), and the upper bridge arm in the second bridge arm (122) to be turned on, and controlling the third switch (K3), the lower bridge arms in the first bridge arm group (121), and the lower bridge arm in the second bridge arm (122) to be turned off comprises:
when the first voltage is smaller than the third voltage, in a fifth duration, controlling the first switch (K1), the second switch (K2), the fourth switch (K4), the fifth switch (K5), the upper bridge arms in the first bridge arm group (121), and the upper bridge arm in the second bridge arm (122) to be turned on, and controlling the third switch (K3), the lower bridge arms in the first bridge arm group (121), and the lower bridge arm in the second bridge arm (122) to be turned off; wherein
a third period comprises the third duration and the fifth duration, and in the third period, the third duration is before the fifth duration.

7. The control method according to claim 5, **characterized in that** the third duration and the fourth duration are alternately distributed.

8. The control method according to claim 6, **characterized in that** the third duration and the fifth duration are alternately distributed.

9. A power battery voltage regulation system (10), **characterized in that**
the power battery voltage regulation system (10) comprises a power battery (11), a switch module (12), a charging and discharging interface (13), and a motor (14);
the switch module (12) comprises a first switch (K1), a second switch (K2), a third switch (K3), a fourth switch (K4), a fifth switch (K5), a first bridge arm group (121), and a second bridge arm (122);
each bridge arm in the first bridge arm group (121) and the second bridge arm (122) comprises an upper bridge arm and a lower bridge arm, joints between the upper bridge arms and the lower bridge arms of the bridge arms in the first bridge arm group (121) are connected to all inductors in the motor (14) in one-to-one correspondence, and a joint between the upper bridge arm and the lower bridge arm of the second bridge arm (122) is connected to a three-phase center point of the motor (14);
one terminal of the first switch (K1) is connected to a positive electrode of the power battery (11), the other terminal of the first switch (K1) is connected to one terminal of the third switch (K3) and connected to all the inductors in the motor (14) via the upper bridge arms in the first bridge arm group (121), the other terminal of the third switch (K3) is connected to one terminal of the fourth switch (K4) and connected to the three-phase center point of the motor (14) via the upper bridge arm in the second bridge arm (122), and the other terminal of the fourth switch (K4) is connected to a positive electrode of the charging and discharging interface (13); and
one terminal of the second switch (K2) is connected to a negative electrode of the power battery (11); the other terminal of the second switch (K2) is connected to one terminal of the fifth switch (K5), connected to all the inductors in the motor (14) via the lower bridge arms in the first bridge arm group (121), and connected to the three-phase center point of the motor (14) via the lower bridge arm in the second bridge arm (122); and the other terminal of the fifth switch (K5) is connected to a negative electrode of the charging and discharging interface (13).

10. A control apparatus of power battery voltage regulation system (10), **characterized by** comprising:
a processor configured to perform the control method according to any one of claims 1 to 3 or the control method according to any one of claims 4 to 8.

11. A motive apparatus, **characterized by** comprising the power battery voltage regulation system (10) according to claim 9, wherein the power battery voltage regulation system (10) is configured to charge or discharge the power battery (11), and the power battery (11) is configured to provide electrical energy to the motive apparatus.
